# EUROPÄISCHE PATENTANMELDUNG

(11) **EP 1 262 342 A1**
(43) Veröffentlichungstag der Anmeldung: **04.12.2002**
(21) Anmeldenummer: 02011816.2
(22) Anmeldetag: 28.05.2002
(51) Int. Cl.: B60G 17/027

(54) **Dämpferbein**

(30) Priorität: 28.05.2001 DE 10126072
(71) Anmelder: Martin Hofer GmbH, 38444 Wolfsburg (DE)
(72) Erfinder: Gebhardt, Thomas, 38446 Wolfsburg (DE); Romanski, Bernhard, 38550 Isenbüttel (DE)
(74) Vertreter: Einsel, Martin

(57) **Zusammenfassung**

Die Erfindung betrifft ein Dämpferbein mit einem Dämpferzylinder, einen in dem Dämpferzylinder verschiebbar vorgesehenen Dämpferkolben, der einen unteren Kolbenraum von einem oberen Kolbenraum trennt und mit einer aus dem Zylinder führenden Kolbenstange verbunden ist, und einer Federeinrichtung, die zwischen einem mit der Kolbenstange verbundenen Kolbenstangenfederteller und einem mit dem Dämpferzylinder verbundenen Zylinderfederteller vorgesehen ist.

Um Federeigenschaften, Dämpfungseigenschaften und eine Standhöhe des Fahrzeuges in gewünschter Weise einzustellen, wird vorgeschlagen, dass ein Zwischenfederteller (8) vorgesehen ist, der durch eine Höhenverstelleinrichtung (4, 16, 13, 20) höhenverstellbar ist, und die Federeinrichtung eine zwischen dem Kolbenstangenfederteller (10) und dem Zwischenfederteller (8) vorgesehene Hauptfeder (6) und eine zwischen dem Zwischenfederteller (8) und dem Zylinderfederteller (17) vorgesehene Nebenfeder (7) aufweist, wobei die Nebenfeder (7) bei einer Höhenverstellung der Nebenfeder in ihrer Länger veränderbar und vorteilhafterweise in einer unteren Stellung des Zwischenfedertellers (8) vollständig zusammengezogen ist.

## Beschreibung

Die Erfindung betrifft ein Dämpferbein mit einem Dämpferzylinder, einem in den Dämpferzylinder verschiebbar vorgesehenen Dämpferkolben, der einen unteren Kolbenraum von einem oberen Kolbenraum trennt und mit einer aus dem Zylinder führenden Kolbenstange verbunden ist, und einer Federeinrichtung, die zwischen einem mit der Kolbenstange verbundenen Kolbenstangenfederteller und einem mit dem Dämpferzylinder verbundenen Zylinderfederteller vorgesehen ist.

Ein Dämpferbein dient aufgrund der Dämpfwirkung des Stoßdämpfers und der Federsteifigkeit der Feder zur Einstellung der gewünschten dynamischen Fahreigenschaften des Fahrzeuges. Das Dämpferbein wird hierbei im allgemeinen zwischen einer fahrwerkseitigen Anbindung, zum Beispiel einem Radführungslenker, und dem Fahrzeugaufbau vorgesehen.

Hierbei können Dämpferbeine auch höhenverstellbar ausgebildet sein. Bei derartigen aus der DE 42 31 642 C2 oder der DE 196 06 991 A1 bekannten Systemen wird zum Beispiel zur Absenkung der Standhöhe die Feder über Drucksysteme eingezogen. Die so gestauchte Feder weist hierbei eine höhere Federsteifigkeit auf, so dass ein Sportfahrwerk mit abgesenktem Aufbau und höherer Federsteifigkeit gebildet werden kann.

Problematisch hierbei ist jedoch im allgemeinen, dass beim Einziehen der Federn die Federeigenschaften nicht so verändert werden, wie es benötigt wird. Eine derartige Verstellung ist insbesondere für Fahrzeuge nicht ausreichend, die im niedrigem Geschwindigkeitsbereich komfortabel gefedert und gedämpft sein sollen und dennoch hohe Geschwindigkeiten erreichen sollen. Auch können die aerodynamischen Eigenschaften durch Verstellung der Höhe des Aufbaus nicht in gewünschter Weise zusätzlich eingestellt werden.

Die EP 0 425 283 B1 beschreibt ein Motorrad mit einem höhenverstellbaren Aufbau und Federbeinen, deren Länge verstellbar ist. Dazu werden hydraulische Zylinder eingesetzt, die mittels verschiedener Schlauchleitungen und geteilter Anschlüsse nebst Kolben-Zylinder-Anordnungen eine recht aufwändige Verstellbarkeit ermöglichen.

Die DE 37 39 663 C betrifft ein einstellbares Federbein für Kraftfahrzeuge. Zwischen zwei Federtellern befindet sich dabei ein Federpaket aus zwei Schraubenfedern mit unterschiedlichen Federkonstanten. Ein Ringkörper zwischen den beiden Schraubenfedern wirkt gegen eine verstellbare Anschlagbuchse, so dass die Federsteifigkeit des Gesamtsystems in gewissem Rahmen beeinflusst werden kann.

Der Erfindung liegt die Aufgabe zugrunde, gegenüber bekannten Dämpferbeinen Verbesserungen zu schaffen und insbesondere die Einstellung unterschiedlicher Federeigenschaften, Dämpfungseigenschaften und Standhöhen zu ermöglichen. Dies soll vorteilhafterweise mit relativ geringem Aufwand möglich sein.

Diese Aufgabe wird bei dem eingangs genannten Dämpferbein gelöst, indem ein Zwischenfederteller vorgesehen ist, der durch eine Höhenverstelleinrichtung höhenverstellbar ist, die Federeinrichtung eine zwischen dem Kolbenstangenfederteller und dem Zwischenfederteller vorgesehene Hauptfeder und eine zwischen dem Zwischenfederteller und dem Zylinderfederteller vorgesehene Nebenfeder aufweist, und die Nebenfeder bei einer Höhenverstellung des Zwischenfedertellers in ihrer Länge veränderbar ist. Hierbei kann die Nebenfeder insbesondere in einer unteren Stellung des Zwischenfedertellers vollständig zusammengezogen sein.

Die Verstellung des Zwischenfedertellers kann vorteilhafterweise hydraulisch erfolgen, indem der Zwischenfederteller mit einem Standhöhenkolben verbunden ist, der in dem Zylinder oberhalb des Dämpferkolbens verschiebbar vorgesehen ist. Somit wird der Zylinderraum des Dämpferzylinders durch den Standhöhenkolben und den Dämpferkolben in einen Standhöhenkolbenraum, einen oberen und einen unteren Kolbenraum getrennt. Durch Beaufschlagung des Standhöhenkolbenraums mit Hydraulikfluid über einen oberen Anschluss kann die Nebenfeder gestaucht werden.

Erfindungsgemäß wird somit eine Veränderung der Federeigenschaften bewirkt, indem eine Federeinrichtung aus in Reihe geschalteter Hauptfeder und Nebenfeder gebildet wird, die über einen Zwischenfederteller miteinander verbunden sind. Hierdurch können wahlweise verschiedene Federsysteme gewählt werden. Indem die Nebenfeder durch den Zwischenfederteller auf Block gezogen werden kann, können zwei Federsysteme gebildet werden, bei denen zum einen lediglich die Hauptfeder und zum anderen beide in Reihe geschalteten Federn wirken. Erfindungsgemäß können hierbei die Federkennlinien der Hauptfeder und Nebenfeder in gewünschter Weise eingestellt werden, so dass in jedem der beiden Zustände die gewünschten Federeigenschaften vorliegen. Insbesondere kann auch die Federlänge der auf Block gezogenen Feder derartig gewählt werden, dass in dem unteren Zustand die zusammengezogene Feder eine gewünschte Standhöhe des Fahrzeuges gewährleistet.

Die erreichte Gesamtfederrate C kann hierbei gemäß der Reihenschaltung ermittelt werden als C = (C1 x C2) / (C1 + C2).

Die Dämpfungseigenschaften können vorteilhafterweise in den beiden Zuständen ebenfalls unterschiedlich eingestellt werden, indem wahlweise der obere Anschluss des Standhöhenkolbenraums mit einem unteren Anschluss des unteren Kolbenraums verbindbar ist. Hierdurch kann insbesondere im ersten, weichgefederten, nicht abgesenkten Zustand des Fahrzeugs für niedrigere Geschwindigkeiten eine weiche Dämpfung über die kurzgeschlossene Verbindung des oberen und unteren Anschlusses erreicht werden. Die Drosselwirkung dieser Verbindungsleitung kann hierbei in gewünschter Weise eingestellt werden, wobei zusätzlich eine Dämpfung über die Einlass- und Auslassventile des Dämpferkolbens erfolgt. Im zweiten, abgesenkten Zustand für höhere Geschwindigkeiten mit höherer Federsteifigkeit kann diese Verbindungsleitung zum Beispiel unterbrochen werden, so dass lediglich eine Dämpfung über die Einlass- und Auslassventile des Dämpferkolbens erfolgt.

Erfindungsgemäß kann insbesondere im zweiten Zustand des Dämpferbeins, bei dem nur noch der Dämpferkolben wie ein normaler Stoßdämpfer wirkt, auf den unteren Kolbenraum über einem Gasraum ein gewünschter Druck aufgegeben werden, um Kavitationen, das heißt Gasblasenbildungen durch in der Hydraulikflüssigkeit gelöste Gase, zu vermeiden. Dieser Gasraum kann hierbei in gewünschter Weise zusätzlich Dämpfungseigenschaften besitzen.

Die Erfindung wird im Folgenden anhand der beiliegenden Zeichnungen an einigen Ausführungsformen erläutert. Es zeigen
- **Figur 1**: eine teilweise geschnittene Darstellung eines Dämpferbeins mit einer Ausführungsform der Erfindung in einem ersten Zustand;
- **Figur 2**: eine teilweise geschnittene Darstellung eines Dämpferbeins aus Figur 1 in einem zweiten Zustand;
- **Figur 3**: eine Steuereinrichtung mit einer Ausführungsform der Erfindung in teilweise geschnittener Darstellung;

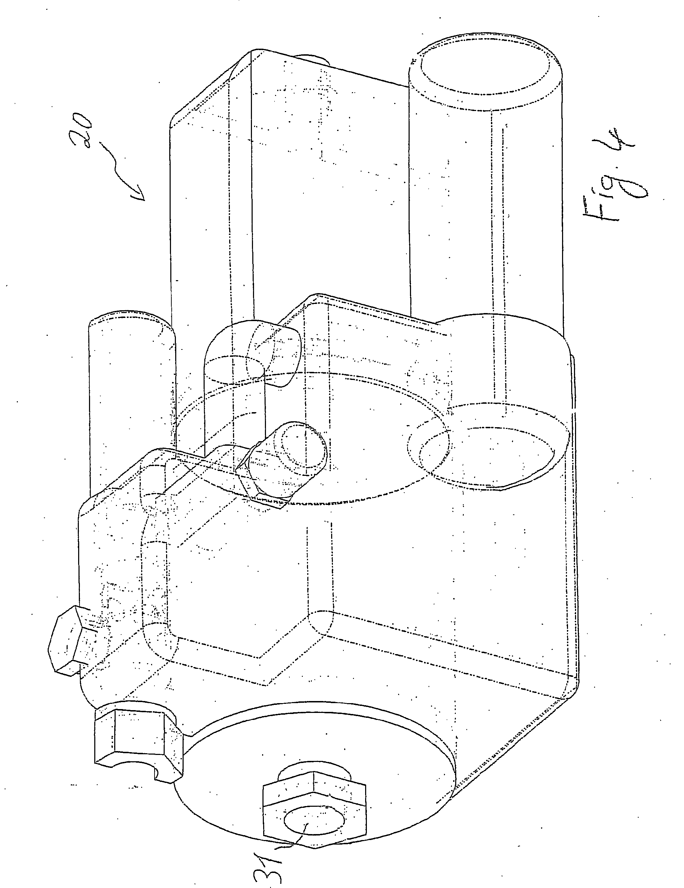

- **Figur 4**: eine perspektivische Darstellung der Steuereinrichtung aus Figur 3.

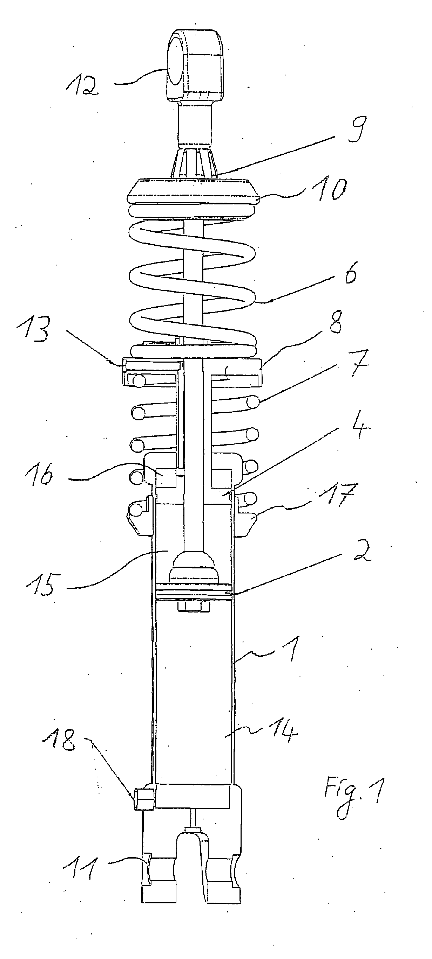

Ein Dämpferbein weist gemäß Figur 1 einen Dämpferzylinder 1 auf, in dessen mit einer Hydraulikflüssigkeit gefüllten Innenraum ein Dämpferkolben 2 verschiebbar geführt ist. Der Dämpferkolben 2 ist mit einer Kolbenstange 3 verbunden, die aus dem Zylinder 1 herausgeführt ist und in einer Kolbenstangenanbindung 12 am Fahrzeugaufbau befestigbar ist. An der Kolbenstange ist ein Kolbenstangenfederteller 10 zur Aufnahme einer Hauptfeder 6 vorgesehen. Über eine Verstelleinrichtung 9 kann der Kolbenstangenfederteller 10 in seiner Höhe variiert werden.

In dem Dämpferzyljnder 1 ist weiterhin erfindungsgemäß ein Standhöhenkolben 4 oberhalb des Dämpferkolbens 2 verschiebbar vorgesehen. Der Standhöhenkolben 4 ist über eine Verbindungsstange 28, die konzentrisch zu der Kolbenstange 3 ausgebildet ist, mit einem Zwischenfederteller 8 außerhalb des Dämpferzylinders 1 verbunden. Eine Hauptfeder 6 ist zwischen dem Kolbenstangenfederteller 10 und dem Zwischenfederteller 8 vorgesehen. Eine Nebenfeder 7 ist zwischen dem Zwischenfederteller 8 und einem Zylinderfederteller 17, der fest an dem Dämpferzylinder 1 angebracht ist, vorgesehen.

Der Zylinderinnenraum des Dämpferzylinders 1 wird erfindungsgemäß durch den Dämpferkolben 2 und den Standhöhenkolben 4 unterteilt in einen unteren Kolbenraum 14 unterhalb des Dämpferkolbens 2, einen oberen Kolbenraum 15 zwischen Dämpferkolben 2 und Standhöhenkolben 4 und eine Standhöhenkolbenraum 16 oberhalb des Standhöhenkolbens 4. Der Standhöhenkolbenraum 16 ist über eine in der Verbindungsstange 28 und dem Zwischenfederteller 8 ausgebildete Hydraulikleitung mit einem oberen Anschluss 13 für eine Hydraulikleitung verbunden. Der untere Kolbenraum 14 ist über einen unteren Anschluss 18 an eine weitere Hydraulikleitung anschließbar.

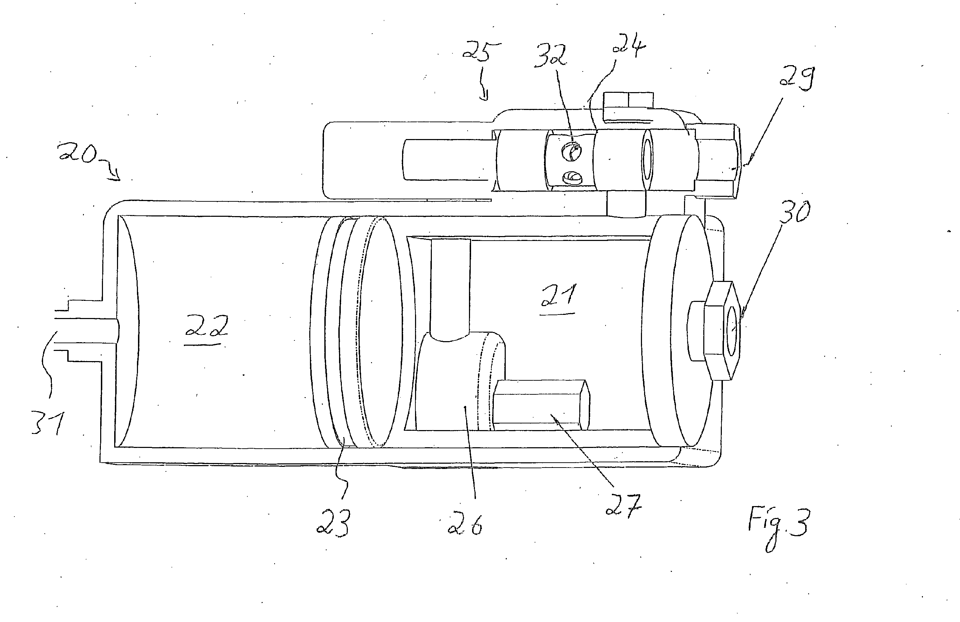

Der Anschluss dieser Hydraulikleitungen erfolgt an eine erfindungsgemäße Steuereinrichtung 20, die in Figur 3 gezeigt ist. Der obere Anschluss 13 kann erfindungsgemäß an einen Hochdruckanschluss 29 eines Steuerventils 25, und der untere Anschluss 18 an einen Gaspolsteranschluss 30 der Steuereinrichtung 20 erfolgen. In dem Steuerventil 25 ist ein Steuerkolben 24 mit zumindest zwei Stellungen verschiebbar vorgesehen, wobei in der in Figur 3 gezeigten zweiten Stellung der Hochdruckanschluss 29 von dem Gaspolsteranschluss 30 getrennt und in einer ersten Stellung über Verbindungsbohrungen 32 des Steuerkolbens 24 eine Verbindung dieser Anschlüsse gewährleistet ist. Das Steuerventil 25 kann insbesondere als Magnetventil ausgebildet sein.

Der Gaspolsteranschluss 30 ist mit einem Hydraulikraum 21 der Steuereinrichtung 20 verbunden, der über einen verschiebbaren Gaskolben mit einem Gasraum 22 verbunden ist. Der Gasraum 22 kann über einen Gasanschluss 31 mit Druck beaufschlagt werden. Eine Ölpumpe 26 mit Filter 27 ist in dem Hydraulikraum 21 zur Erzeugung eines gewünschten Hydraulikdrucks vorgesehen.

In Figur 1 ist eine erste Stellung des erfindungsgemäßen Dämpferbeins gezeigt, in der die Hauptfeder 6 und die Nebenfeder 7 in einem vorgespannten Zustand sind. Die Federung des Gesamtsystems wird somit durch diese beiden in Reihe geschalteten Federn bewirkt, wodurch eine geringe Federsteifigkeit erreicht wird. Der untere Hydraulikanschluss 18 und der obere Hydraulikanschluss 13 sind über die Steuereinrichtung 20 über die Bohrungen 32 des Steuerkolbens 24 miteinander verbunden, so dass eine Verbindungsleitung oder Bypassleitung zwischen dem Standhöhenkolbenraum 16 und dem unteren Kolbenraum 14 gewährleistet ist, die aufgrund ihres Strömungswiderstandes eine gewünschte Dämpfung bewirkt. Weiterhin ist der Dämpferkolben 2 durch seine Einlass- und Auslassventile in an sich bekannter Weise verschiebbar, so dass sich eine Dämpfungswirkung durch zum einen die Verbindungsleitung und zum anderen den Dämpferkolben 2 ergibt. In diesem ersten Zustand ist eine relativ große Standhöhe eingestellt. Diese Stellung eignet sich insbesondere für Fahrten mit geringer Geschwindigkeit, da eine weiche Federkennung und eine weiche Dämpfung vorgesehen ist und das Fahrzeug aufgrund der größeren Standhöhe größere Schwingungen durchführen kann.

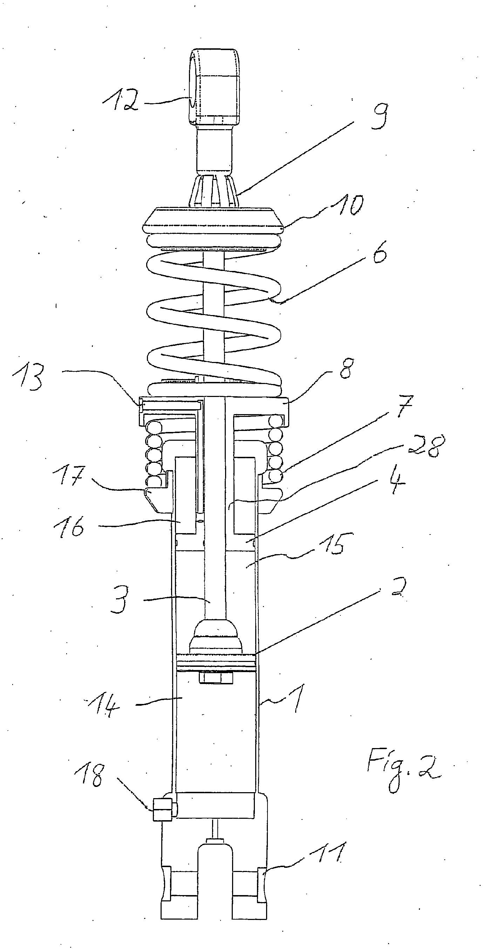

In Figur 2 ist eine zweite Stellung gezeigt. Hierbei wird von dem Hochdruckanschluss 29 unter Hochdruck stehende Hydraulikflüssigkeit an den oberen Hydraulikanschluss 13 gegeben. Das unter Hochdruck stehende Fluid drückt in dem Standhöhenkolbenraum 16 den Standhöhenkolben 4 nach unten bis die Nebenfeder 7 vollständig zusammengezogen beziehungsweise auf Block gezogen ist. Die Steuereinrichtung nimmt anschließend den in Figur 3 gezeigten Zustand ein, bei dem der Hochdruckanschluss 29 durch das Steuerventil 24 von dem Hydraulikraum 21 getrennt ist. Über den Gaseinlass 21 wird in dem Gasraum ein erhöhter Druck eingegeben, so dass die Hydraulikflüssigkeit im unteren Kolbenraum 14 und oberen Kolbenraum 15 zur Vermeidung von Kavitationen unter Druck gesetzt ist.

In diesem zweiten Zustand wird eine abgesenkte Standhöhe erreicht, die von der Länge der zusammengezogenen Nebenfeder 7 bestimmt ist. Da lediglich die Hauptfeder 6 die Federeigenschaften des Systems bestimmt, wird eine höhere Federsteifigkeit erreicht als in dem ersten Zustand der Figur 1. Da der Standhöhenkolbenraum 16 nicht mehr mit dem unteren Kolbenraum 14 verbunden ist, sind die Dämpfungseigenschaften durch die Einlass- und Auslassventile des Dämpferkolbens 2 bestimmt, so dass eine härtere Dämpfung erreicht wird. Dieser Zustand kann insbesondere für höhere Geschwindigkeiten mit härterer Federung, härterer Dämpfung und abgesenktem Fahrzeugaufbau für bessere aerodynamische Eigenschaften verwendet werden.

### Bezugszeichenliste

- 1: Dämpferzylinder
- 2: Dämpferkolben
- 3: Kolbenstange
- 4: Standhöhenkolben
- 6: Hauptfeder
- 7: Nebenfeder
- 8: Zwischenfederteller
- 9: Verstelleinrichtung

- 10: Kolbenstangenfederteller
- 11: Zylinderanbindung
- 12: Kolbenstangenanbindung
- 13: oberer Anschluss
- 14: unterer Kolbenraum
- 15: oberer Kolbenraum
- 16: Standhöhenkolbenraum
- 17: Zylinderfederteller
- 18: unterer Anschluss

- 20: Steuereinrichtung
- 21: Hydraulikraum
- 22: Gasraum
- 23: Gaskolben
- 24: Steuerkolben
- 25: Steuerventil
- 26: Hydraulikpumpe
- 27: Filter
- 28: Verbindungsstange
- 29: Hochdruckanschluss
- 30: Gaspolsteranschluss
- 31: Gasanschluss
- 32: Verbindungsbohrungen

## Patentansprüche

1. Dämpferbein,
- mit einem Dämpferzylinder (1),
- mit einem in dem Dämpferzylinder (1) verschiebbar vorgesehenen Dämpferkolben (2), der einen unteren Kolbenraum (14) von einem oberen Kolbenraum (15) trennt und mit einer aus dem Zylinder führenden Kolbenstange (3) verbunden ist,
- mit einer Federeinrichtung (6, 7), die zwischen einem mit der Kolbenstange (3) verbundenen Kolbenstangenfederteller (10) und einem mit dem Dämpferzylinder (1) verbundenen Zylinderfederteller (17) vorgesehen ist,
- mit einem Zwischenfederteller (8), der durch eine Höhenverstelleinrichtung (4, 16, 13, 20) höhenverstellbar ist,
**wobei** die Federeinrichtung eine zwischen dem Kolbenstangenfederteller (10) und dem Zwischenfederteller (8) vorgesehene Hauptfeder (6) und eine zwischen dem Zwischenfederteller (8) und dem Zylinderfederteller (17) vorgesehene Nebenfeder (7) aufweist,
wobei die Nebenfeder (7) bei einer Höhenverstellung des Zwischenfedertellers (8) in ihrer Länge veränderbar ist,
wobei die Höhenverstelleinrichtung einen Standhöhenkolben (4) aufweist, der in dem Dämpferzylinder (1) oberhalb des Dämpferkolbens (2) verschiebbar vorgesehen ist und einen Standhöhenkolbenraum (16) von dem oberen Kolbenraum (15) trennt,
**wobei** der Zwischenfederteller (8) mit dem Standhöhenkolben (4) verbunden ist und
**wobei** der Standhöhenkolbenraum (16) einen oberen Anschluss (13) für eine Hydraulikleitung aufweist.

2. Dämpferbein nach Anspruch 1,
**dadurch gekennzeichnet,**
**dass** die Nebenfeder (7) in einer unteren Stellung des Zwischenfedertellers (8) vollständig zusammengezogen ist.

3. Dämpferbein nach Anspruch 1 oder 2,
**dadurch gekennzeichnet,**
**dass** der untere Kolbenraum (14) einen unteren Anschluss (18) für eine Hydraulikleitung aufweist, wobei in einem ersten Zustand der obere Anschluss (13) des Standhöhenkolbenraums (16) mit dem unteren Anschluss (18) des unteren Kolbenraums (14) verbunden ist.

4. Dämpferbein nach Anspruch 3,
**dadurch gekennzeichnet,**
**dass** in einem zweiten Zustand, in dem die Nebenfeder (7) vollständig zusammengezogen ist, der obere Anschluss (13) von dem unteren Anschluss (18) getrennt ist.

5. Dämpferbein nach Anspruch 4,
**dadurch gekennzeichnet,**
**dass** zumindest in dem zweiten Zustand der untere Anschluss (18) über eine Hydraulikleitung mit einem Hydraulikraum (21) verbunden ist, der von einem Gasraum (22) mit Druck beaufschlagbar ist.

6. Dämpferbein nach Anspruch 5,
**dadurch gekennzeichnet,**
**dass** der Hydraulikraum (21) von dem Gasraum (22) durch einen verschiebbaren Gaskolben (23) getrennt ist.

7. Dämpferbein nach Anspruch 5 oder 6,
**dadurch gekennzeichnet,**
**dass** im Hydraulikraum (21) eine Hydraulikpumpe (26) zur Zuführung einer Hydraulikflüssigkeit in den Hydraulikraum vorgesehen ist.

8. Dämpferbein nach Anspruch 6 oder 7,
**dadurch gekennzeichnet,**
**dass** in dem Hydraulikraum (21) ein Steuerventil, vorzugsweise ein Magnetventil (25), zur wahlweisen Verbindung des oberen Anschlusses (13) mit dem unteren Anschluss (18) vorgesehen ist.

9. Dämpferbein nach einem der vorherigen Ansprüche,
**dadurch gekennzeichnet,**
**dass** der Standhöhenkolben (4) mit dem Zwischenfederteller (8) über eine konzentrisch zur Kolbenstange (3) angeordnete und der Kolbenstange gegenüber verschiebbaren Verbindungsstange (28) verbunden ist.

10. Dämpferbein nach Anspruch 9,
**dadurch gekennzeichnet,**
**dass** der Standhöhenkolbenraum (16) mit dem oberen Anschluss (13) über eine in der Verbindungsstange (28) und dem Zwischenfederteller (8) verlaufende Hydraulikleitung verbunden ist.

11. Dämpferbein nach einem der vorherigen Ansprüche,
**dadurch gekennzeichnet,**
**dass** die Federrate (C1) der Hauptfeder (6) und eine Federrate (C2) der Nebenfeder (7) über die Gesamtfederrate (C) gemäß der Formel C = (C1 x C2) / (C1 + C2) in Verbindung steht.

12. Dämpferbein nach Anspruch 11,
**dadurch gekennzeichnet,**
**dass** die Federkennlinien der Hauptfeder (6) und der Nebenfeder (7) unterschiedlich sind.
